# DEMANDE DE BREVET EUROPEEN

(11) **EP 1 649 755 A1**
(43) Date de publication de la demande: **26.04.2006**
(21) Numéro de dépôt: 05300802.5
(22) Date de dépôt: 07.10.2005
(51) Int. Cl.: A23C 9/13

(54) **Procédé par lequel on modifie les qualités sensorielles d'un produit laitier fermenté et sa maturation lors de la conservation dudit produit**

(30) Priorité: 21.10.2004 FR 0452386
(71) Demandeur: L'Air Liquide Société Anon. à Directoire et Conseil de Surveillance pour l'Etude et l'Exploitation des Procédés Georges Claude, 75007 Paris (FR)
(72) Inventeur: Cachon, Rémy, 21000, DIJON (FR); Féron, Gilles, 21270, PONTAILLER SUR SAONE (FR); Delbeau, Carole, 21000, DIJON (FR); Ibarra, Dominique, 91190, GIF SUR YVETTE (FR); Ledon, Henry, 78000, VERSAILLES (FR)
(74) Mandataire: Mellul-Bendelac, Sylvie Lisette

(57) **Abrégé**

Un procédé de fabrication d'un produit laitier fermenté, du type où l'on procède durant l'une des étapes du procédé de fabrication à un ensemencement d'un mélange laitier avec une ou plusieurs souches de bactéries lactiques, et se caractérisant en ce que l'on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air.

## Description

La présente invention concerne le domaine de la fabrication de produits laitiers fermentés, elle s'est attachée à proposer un nouveau procédé permettant de fabriquer des produits dont les conditions de fermentation soit maîtrisées et présentant de nouvelles propriétés sensorielles.

L'invention s'intéresse aux produits laitiers de type « yaourt » ou « lait fermenté », aux fromages non affinés dont la fabrication comporte une étape de fermentation, du genre fromage blanc, fromages frais tel demi-sel ou « petit-suisses », au fromage Cottage.... etc...sans oublier les crèmes maturées, beurres acides qu'ils soient élaborés à partir de lait ou de matières d'origine laitières de toute origine et notamment vache, brebis, chèvre, jument,...etc.. On aura donc compris à la lecture de ce qui précède que l'invention ne concerne pas les fromages dits « affinés ».

Rappelons ici en quelques mots que l'affinage représente la dernière étape de la fabrication d'un fromage, l'affinage est une étape de maturation plus ou moins longue, dans des conditions définies de température et d'humidité de l'atmosphère, pendant laquelle ont lieu des réactions biochimiques, enzymatiques ainsi que le développement de la flore de surface.

Les fromages « non affinés » sont donc des fromages n'ayant subi aucune étape d'affinage.

On sait que l'on entend par exemple par la dénomination « lait fermenté » selon la définition la plus couramment admise un produit laitier préparé avec des laits écrémés ou non, ou des laits concentrés ou en poudre écrémés ou non, enrichis ou non de constituants du lait, ayant subi un traitement thermique au moins équivalent à la pasteurisation, ensemencés avec des microorganismes appartenant à l'espèce ou aux espèces caractéristiques de chaque produit .

De même on entend par la dénomination « yaourt » ou « yoghurt » un lait fermenté obtenu, selon les usages loyaux et constants, par le développement des seules bactéries lactiques thermophiles spécifiques dites Lactobacillus bulgaricus et Streptococcus thermophilus, qui doivent être ensemencées simultanément et se trouver vivantes dans le produit fini, à raison d'au moins 10 millions de bactéries par gramme rapportées à la partie lactée .

Les oxydo-réductions sont des étapes essentielles dans les réactions de l'anabolisme et du catabolisme cellulaire, pour lesquelles le sens des échanges est déterminé par le potentiel d'oxydo-réduction (ci-après Eh). Le Eh est un paramètre d'état des fermentations ; sa variation modifie l'environnement physico-chimique des microorganismes. Les activités métaboliques et la physiologie des microorganismes sont déterminées par le pH intracellulaire (pHᵢₙ) qui va conditionner l'activité des enzymes et l'accessibilité de certains substrats et cofacteurs dans les réactions du métabolisme. Le pHᵢₙ est fonction du pH extracellulaire (pHₑₓ) et de l'aptitude du microorganisme à maintenir une certaine homéostasie cellulaire. La différence entre le pHᵢₙ et le pHₑₓ va également modifier la valeur de la force proto-motrice ΔµH⁺, {ΔµH⁺= ΔΨ(gradient de potentiel électrique)- ZΔpH (gradient de pH)}, qui est notamment impliquée dans les échanges de la cellule microbienne avec l'extérieur. Les paramètres Eh et pHᵢₙ sont intimement liés ; ainsi l'énergie retrouvée dans les composés à haut potentiel comme d'adénosine tri-phosphate (ATP) et gagnée par le catabolisme des substrats pourra être utilisée par la cellule pour maintenir son pHᵢₙ (et donc son ΔpH) grâce aux ATPases membranaires.

Selon Urbach et al en 1995 (« Contribution of lactic acid bacteria to flavour compound formation in dairy products", *International Dairy Journal*. 5: 877-903), les bactéries lactiques sont largement impliquées dans la production des arômes des produits laitiers fermentés ; elles convertissent le lactose en acide lactique ; ceci conduit à la production de diacétyle et d'acétaldéhyde qui sont les principaux arômes des laits fermentés et des fromages frais. Le Eh est un paramètre environnemental qui va pouvoir conditionner les activités métaboliques des microorganismes et notamment leur capacité à synthétiser des molécules d'arômes. En particulier, il a été montré pour l'emmental et le cheddar, que les fromages de bonne qualité avaient un faible potentiel d'oxydoréduction.

Pour les yaourts, de nombreux composés volatiles sont impliqués dans sa flaveur : des hydrocarbones, des alcools, des aldéhydes, des cétones, des acides, des esters, des lactones, des composés soufrés et des furanes (article de Ott et al paru en 1997 dans *Journal of Agricultural and Food Chemistry.* 45(3): 850-858).

Le Eh est un paramètre physico-chimique qui, de par sa nature, agit sur tous les milieux, pourvu que ceux-ci contiennent au moins une molécule qui puisse passer d'un état oxydé à réduit et vice versa. C'est pourquoi son effet est perceptible sur toutes les fonctions cellulaires. Son action a été montrée sur différents types de souches bactériennes :
- L'ajout de réducteurs chimiques dans les milieux de culture a permis de modifier significativement la croissance et les flux métaboliques chez *Corynebacterium glutamicum*, *Clostridium acetobutylicum, Sporidiobolus* ruinenii et *Escherichia coli* (voir par exemple les travaux de Kwong et al parus en 1992 dans *Biotechnology and Bioengineering.* 40: 851-857).
- Un Eh réducteur fixé par des gaz a permis de modifier les flux métaboliques chez *Saccharomyces cerevisiae* avec une augmentation du ratio glycérol/éthanol et l'accumulation des sucres de réserve avec augmentation de la survie des levures lors de la conservation (voir le document FR 2.811.331 au nom de la Demanderesse).

En milieu industriel, le Eh est déjà indirectement pris en compte au travers de l'oxygène dont l'effet inhibiteur sur les bactéries lactiques est bien identifié. Cet effet est dû à leur incapacité à synthétiser des cytochromes et les enzymes à noyau hème.

On sait par ailleurs qu'il est aussi possible en agissant sur le Eh de modifier la survie des ferments probiotiques, les flux métaboliques, la production et/ou la stabilité des molécules d'arômes. L'ensemble de ces résultats a été obtenu suite à une modification du Eh par les microorganismes eux-mêmes, par des molécules oxydo-réductrices, ou par traitement thermique.

On conçoit que dans la perspective d'une application alimentaire pharmaceutique ou vétérinaire, la variation du Eh doit faire intervenir des composés ne modifiant pas les caractéristiques du produit. C'est pourquoi des travaux de l'art antérieur ont proposé d'utiliser des gaz purs ou des mélanges gazeux qui préserveront l'innocuité des produits (on peut se reporter à ce propos au document FR-2.811.331 au nom de la Demanderesse déjà cité plus haut, et également à l'article de Vonktaveesuk Phenjun et al paru en 1994 dans *Journal of Fermentation and Bioengineering.* 77 N°5: 508-512).

Dans le domaine de l'utilisation de mélanges gazeux dans les milieux de fermentation de bactéries lactiques on peut enfin citer les travaux de Henriksen et al parus dans Letters in Applied Microbiology en 2000 (vol. 30 p415-418) qui se sont intéressés à la croissance de bactéries lactiques, et ont montré que lorsque les cultures étaient balayées par de l'azote la croissance était fortement ralentie, alors que l'ajout d'infimes quantités de CO₂ dans ce cas faisait redémarrer la croissance sous forme exponentielle.

Un des objectifs de la présente invention est de proposer de nouvelles conditions permettant d'améliorer les caractéristiques organoleptiques d'un produit laitier fermenté du type de ceux listés plus haut.

On rappellera par exemple que la fabrication d'un yaourt comprend couramment les étapes suivantes :
- une préparation du lait qui comprend en général les additions de composants tels matières grasses ou protéines pour en fixer la composition ;
- une étape de pasteurisation (traitement thermique) ;
- une homogénéisation (qui peut avoir lieu avant ou après la pasteurisation) ;
- un refroidissement jusqu'à la température à laquelle aura lieu la fermentation ;
- l'ensemencement avec les souches souhaitées ;
- selon le type de yaourt : une fermentation en cuve suivi d'un lissage avant une mise en pot (yaourts dits brassés), ou bien la répartition préalable en pots où s'effectuera la fermentation (yaourts dits fermes).

Comme on le verra ci-dessous plus en détail, le procédé de préparation d'un produit laitier fermenté selon l'invention est remarquable en ce que l'on procède au traitement du mélange laitier considéré (lait entier, lait partiellement écrémé ou écrémé, lait standardisé en matières grasses, lait standardisé en protéines, lait fortifié par de la poudre de lait écrémé ou de lait concentré, crème, babeurre ...) par un gaz comportant de l'hydrogène, pour obtenir une valeur du potentiel redox Eh désirée inférieure à la valeur obtenue quand le mélange est en équilibre avec l'air, ceci avant l'étape d'ensemencement.

Et comme on le verra également en détail ci-dessous, les produits ainsi fabriqués présentent des propriétés organoleptiques sensiblement améliorées.

Il est à noter que l'ensemencement des cuves de fabrication peut se faire de manière directe, ou indirecte à savoir que l'on effectue alors une ou plusieurs pré-cultures successives afin de constituer l'inoculum qui servira à ensemencer le mélange laitier à fermenter.

Selon l'invention, si l'ensemencement a lieu de manière indirecte, on peut non seulement procéder au traitement du mélange laitier avant ensemencement comme précédemment expliqué, mais également avantageusement de plus fabriquer la préculture en traitant son milieu de croissance par un gaz de traitement permettant d'obtenir une valeur de potentiel redox inférieure à la valeur obtenue en l'absence de traitement.

On comprend donc que selon l'invention, par l'utilisation d'un flux gazeux réducteur comparé à l'air, on abaisse le potentiel d'oxydoréduction du milieu traité par rapport à la valeur qu'il aurait en l'absence dudit flux gazeux, c'est-à-dire à l'air, toutes choses étant égales par ailleurs.

L'invention couvre ainsi les milieux réducteurs proprement dits (on a abaissé le potentiel redox en dessous de 0) mais également le cas où le flux gazeux permet d'abaisser le potentiel d'oxydoréduction d'un milieu initialement oxydant, même si le potentiel final atteint à l'aide dudit flux gazeux reste positif en soi (on est alors au final toujours en milieu oxydant).

On rappelle que les valeurs du potentiel redox dépendent notamment de la composition du milieu de culture et de son pH, la référence utilisée pour apprécier la baisse du potentiel redox obtenue conformément à l'invention, présentant la même composition de milieu à pH semblable.

Le contact gaz liquide peut être obtenu selon l'un des procédés bien connus de l'homme du métier tel que bullage au travers du mélange laitier à l'aide d'un fritté, d'une membrane ou d'un poreux, agitation par une turbine à arbre creux, utilisation d'un hydro-injecteur,...etc... Un ou plusieurs points d'injection de gaz peuvent être utilisés dans les cuves de réception et de stockage du lait, des cuves de standardisation, des cuves d'enrichissement, des cuves d'inoculation etc....

Des injections en ligne peuvent êtres également réalisées sur diverses parties de canalisation des installations de production menant d'un poste à l'autre de cette installation.

La valeur du potentiel redox peut être mesurée soit après le premier point d'injection de gaz, soit en plusieurs points et de préférence dans la cuve d'inoculation soit dans la cuve de fermentation. Il est particulièrement avantageux que le potentiel redox soit abaissé à la valeur désirée ou proche de la valeur désirée avant le traitement thermique, pour limiter l'impact du développement de goût de brûlé au cours de celui-ci.

La présente invention concerne alors un procédé de fabrication d'un produit laitier fermenté présentant des propriétés organoleptiques améliorées, du type où l'on procède durant l'une des étapes du procédé de fabrication à un ensemencement d'un mélange laitier avec une ou plusieurs souches de bactéries lactiques, et se caractérisant en ce que l'on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air.

Le procédé selon l'invention peut également adopter l'une ou plusieurs des caractéristiques techniques suivantes :
- ladite valeur du potentiel redox désirée est inférieure à +250 mV.
- ladite valeur du potentiel redox désirée est inférieure d'au moins 100 mV à la valeur obtenue quand le mélange laitier est en équilibre avec l'air.
- ladite valeur du potentiel redox désirée est négative.
- on modifie les propriétés sensorielles du produit laitier ainsi fabriqué.
- on modifie dans le produit laitier ainsi fabriqué les quantités de composés d'arômes produites.
- on modifie la synérèse du produit laitier ainsi fabriqué.
- l'ensemencement du mélange laitier est effectué de manière indirecte par le fait que l'on effectue au préalable une ou plusieurs pré-cultures successives afin de constituer l'inoculum qui servira à ensemencer le mélange laitier à fermenter, et l'on procède également à un traitement de la préculture en traitant son milieu de croissance par un gaz de pré-traitement permettant d'obtenir une valeur de potentiel redox inférieure à la valeur qui serait obtenue en l'absence de traitement.
- ledit gaz de traitement ou de pré-traitement est de l'hydrogène.
- ledit gaz de pré-traitement est de l'azote.
- ledit gaz de traitement ou de pré-traitement est un mélange d'hydrogène et d'azote.
- ledit gaz de traitement ou de pré-traitement comprend en outre un gaz complémentaire acceptable du point de vue dudit produit laitier considéré.
- le gaz complémentaire est choisi parmi les gaz inertes, notamment argon, hélium, et parmi l'oxygène, le dioxyde de carbone et le protoxyde d'azote et leurs mélanges en toutes proportions, de préférence parmi le dioxyde de carbone et l'oxygène ainsi que leurs mélanges.
- ledit gaz de traitement ou de pré-traitement est un mélange d'hydrogène et de dioxyde de carbone.

D'autres caractéristiques et avantages de l'invention ressortiront des exemples ci-dessous détaillés.

### Exemple 1: propriétés sensorielles de yaourts préparés à différentes valeurs du potentiel redox.

Du lait écrémé stérile a été traité pendant 40 minutes à un débit de 0,15 vvm (volume de gaz par volume de milieu par minute) dans des flacons Shotts de 250mL, par bullage de trois gaz différents, jusqu'à obtention d'une valeur constante (stabilisée) du potentiel redox Eh :
Air (référence) :
   Azote
   Mélange azote/hydrogène 96/4 en volume

Les valeurs du potentiel redox ainsi atteint, ramené au PH7 (par des formules bien connues de l'homme du métier comme l'équation de Leistner et Mirna qui permet de ramener le Eh d'un milieu de pH = x à sa valeur à pH7) selon le gaz utilisé, mesurées avec une sonde Mettler Toledo sont les suivantes :

| Air | Azote | Azote/Hydrogène (96/4) |
|---|---|---|
| +326 mV | +211 mV | -319 mV |

Les milieux ont alors été ensemencés par un mélange de bactéries lactiques: *Streptococcus thermophilus* et *Lactobacillus bulgaricus* puis placés dans un bain marie à 42°C jusqu'à ce qu'un pH de 4,6 soit atteint ; à ce pH, les fermenteurs ont été placés dans un bain marie à 4°C pendant 1 heure afin d'arrêter l'acidification. Les yaourts ainsi fabriqués ont été placés en chambre froide à 4°C.

### a) Contrôle de l'atmosphère gazeuse

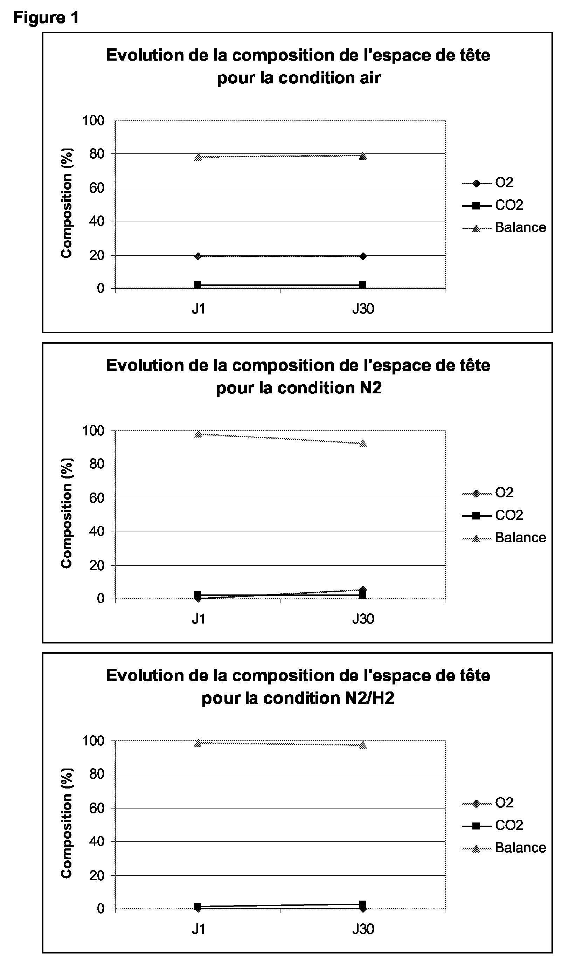

La composition gazeuse de l'espace de tête des fermenteurs a été déterminée grâce à un analyseur de gaz (Dynatest). Les résultats présentés en figure 1 montrent que la composition gazeuse dans l'espace de tête est stable à 30 jours.

### b) Analyse sensorielle des yaourts

L'analyse sensorielle a été réalisée par un jury constitué de 13 personnes non entraînées à la dégustation des yaourts, recrutées parmi les doctorants et les permanents d'un laboratoire de microbiologie. Les échantillons ont été codés et présentés au hasard au panel à 1 et 30 jours de conservation (durée de vie légale du produit). Des notes olfactives et gustatives allant de 0 à 10 ont été données pour chaque échantillon ; l'ordre de préférence des yaourts a également été déterminé.

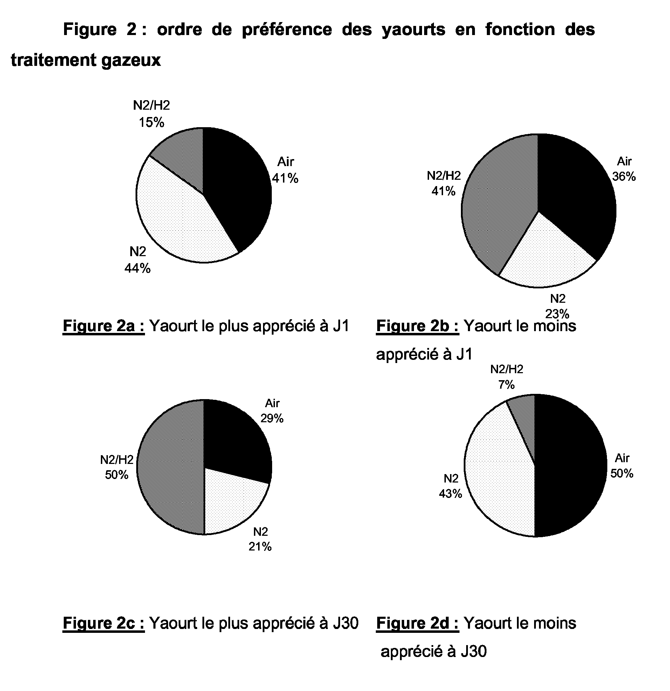

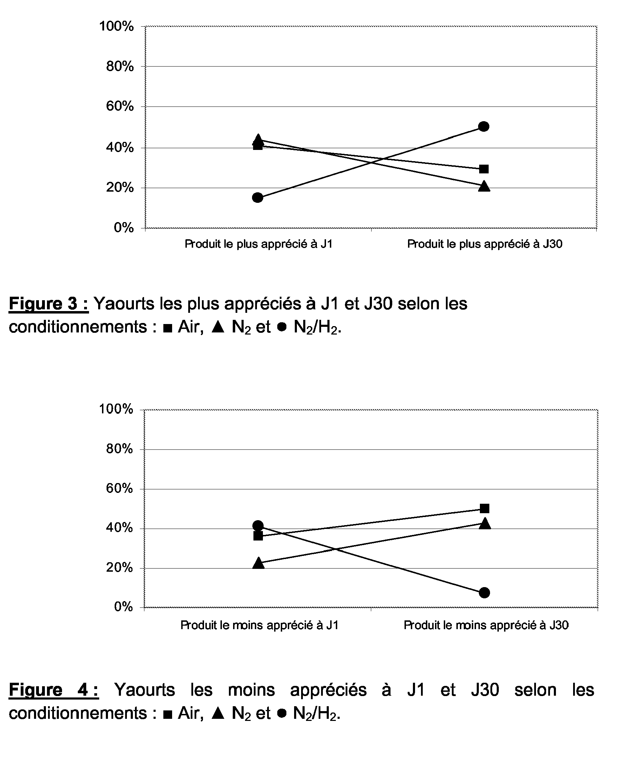

On illustre ci-dessous en figures 2, 3 et 4 les ordres de préférence observés.

Il apparaît qu'à J1, les yaourts conditionnés sous air et sous azote sont les plus appréciés. Une inversion de cette tendance est observée à J30 puisque ce sont les yaourts conditionnés sous azote/hydrogène qui sont préférés.

### Exemple 2 : effet des conditions réductrices sur l'exsudation et les composés aromatiques d'un yaourt

Les conditions de l'exemple 1 ont été reproduites mais cette fois en répartissant les laits ensemencés en flacons Schott de 25mL (conditionnement sous atmosphère correspondante) avant la fermentation en bain-marie.

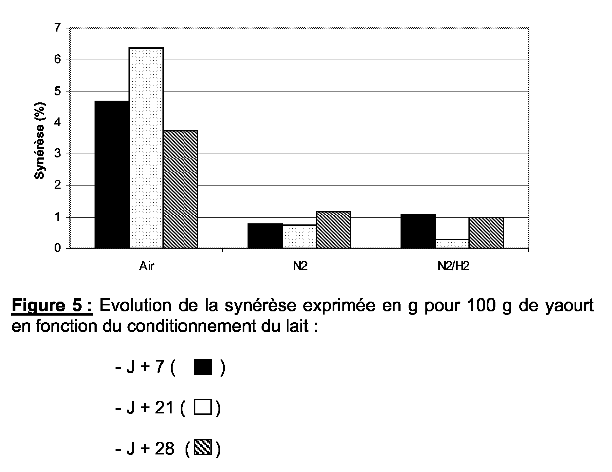

Pendant la durée de vie du yaourt, l'évolution de l'exsudation a été suivie à J+7, J+21 et J+28. La figure 5 représente les résultats à J7, J21 et J28. Ils montrent un effet significatif du traitement réalisé selon l'invention sur l'exsudation. Une fabrication de yaourts en conditions réductrices (N2 ou N2/H2) permet donc de réduire très significativement le phénomène d'exsudation par rapport à une fabrication sous air.

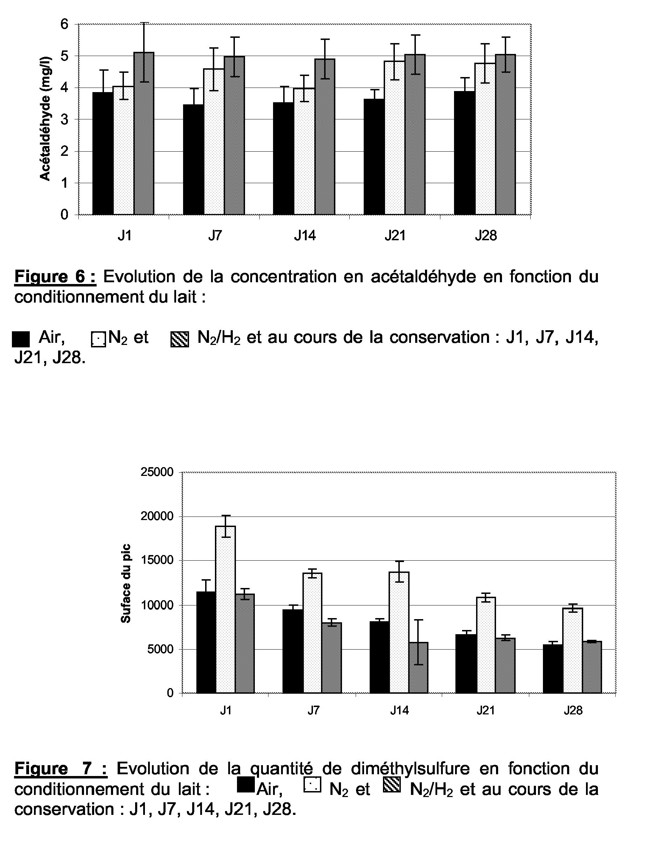

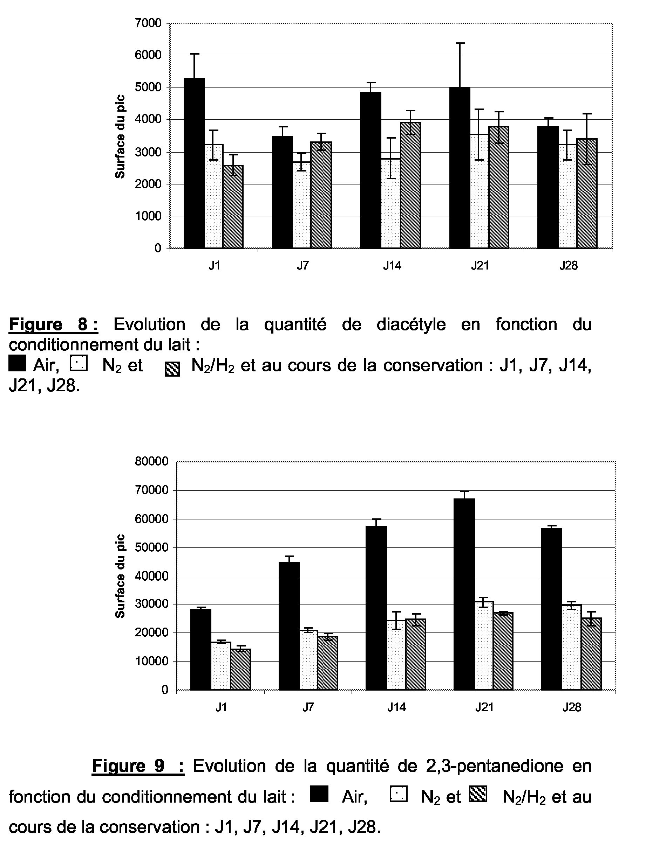

Par ailleurs, les teneurs de 4 composés d'arômes caractéristiques du yaourt ont également été déterminés : l'acétaldéhyde, le dimethylsulfure, le diacétyle et le 2,3- pentanedione. Les résultats sont présentés en figures 6 à 9.

Le traitement statistique des résultats montre tout d'abord une quantité plus importante d'acétaldéhyde pour les yaourts fabriqués à partir du lait conditionné sous N₂/H₂ par rapport à celle obtenue pour le lait conditionné sous N₂, elle-même supérieure à celle obtenue sous air.

Par ailleurs une diminution de la quantité de diméthylsulfure au cours des 3 premières semaines de conservation est mise en évidence pour les 3 conditions. Il est à noter que la quantité du composé est à chaque fois légèrement supérieure dans les yaourts fabriqués avec du lait conditionné sous azote par rapport à l'air et au mélange N₂/H₂.

La quantité de diacétyle dans les yaourts reste relativement stable au cours de la conservation. Une quantité légèrement supérieure de ce composé semble être mise en évidence sous air par rapport aux conditions moins oxydantes dans les 3 premières semaines de conservation, mais celle-ci est équivalente à J28.

La quantité de 2,3-pentanedione augmente au cours de la conservation jusqu'à J21. Celle-ci est significativement supérieure sous air par rapport à la condition N₂, elle-même supérieure à la condition N₂/H₂, et ce, sur les 4 semaines.

En conclusion on peut souligner que les résultats de ces essais indiquent que certains yaourts ont été plus appréciés que d'autres. Ceci montre bien qu'il existe des différences sensorielles entre les produits fabriqués selon les différentes atmosphères testées dans leur intervention avant ensemencement.

Ces différences organoleptiques s'expliquent notamment d'un point de vue olfactif et gustatif, du fait de l'effet significatif comme on l'a démontré ci-dessus du Eh sur la quantité de différents composés d'arômes dans le produit fini.

De même, il a été montré qu'une diminution du Eh permet de réduire le phénomène d'exsudation qui véhicule une image négative aux yeux du consommateur. Cette baisse de synérèse témoigne d'une meilleure stabilité du yaourt. Elle peut être due à une production d'exopolysaccharides bactériens plus importante et/ou à une modification des réactions biochimiques qui font le réseau protéique.

Un environnement réducteur a donc un impact sur l'orientation des flux métaboliques des bactéries, de même que sur les réactions biochimiques se produisant lors de la fabrication des produits laitiers tels yaourts et laits fermentés.

Ainsi en terme de texture, le lait comporte naturellement des protéines sériques. Lors de la fabrication de produits laitiers tels yaourts ou laits fermentés, il est souvent enrichi d'ingrédients laitiers contenant eux-même des protéines du lactosérum (β-lactoglobuline et α-lactalbumine). Or ces protéines sont riches en acides aminés soufrés. Ces derniers interviennent lors de la formation du réseau protéique du yaourt, notamment par l'intermédiaire de ponts disulfures. On peut penser que l'ajout d'un gaz (ou mélange de gaz) réducteur va influencer les réactions d'oxydoréduction faisant intervenir le couple RSH/RS-SR. Le réseau protéique de tels produits laitiers peut s'en trouver modifier de même que, par conséquent, les propriétés rhéologiques du produit et donc la texture perçue en pot ou en bouche.

Par ailleurs, il faut mentionner un autre avantage de l'invention lié au fait que l'invention permettant de rendre le milieu réducteur, on peut penser que cela permettrait de protéger certains composés (qu'ils soient naturellement présents ou ajoutés dans la formulation) particulièrement sensibles de l'oxydation telles les matières grasses, certaines vitamines etc ....

## Revendications

1. Procédé de fabrication d'un produit laitier fermenté présentant des propriétés organoleptiques améliorées, du type où l'on procède durant l'une des étapes du procédé de fabrication à un ensemencement d'un mélange laitier avec une ou plusieurs souches de bactéries lactiques, et **se caractérisant en ce que** l'on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air.

2. Procédé de fabrication selon la revendication 1, **caractérisé en ce que** ladite valeur du potentiel redox désirée est inférieure à +250 mV.

3. Procédé de fabrication selon la revendication 2, **caractérisé en ce que** ladite valeur du potentiel redox désirée est inférieure d'au moins 100 mV à la valeur obtenue quand le mélange laitier est en équilibre avec l'air.

4. Procédé de fabrication selon la revendication 2, **caractérisé en ce que** ladite valeur du potentiel redox désirée est négative.

5. Procédé de fabrication selon l'une des revendications précédentes, **caractérisé en ce que** l'on modifie les propriétés sensorielles du produit laitier ainsi fabriqué.

6. Procédé de fabrication selon l'une des revendications 1 à 4, **caractérisé en ce que** l'on modifie dans le produit laitier ainsi fabriqué les quantités de composés d'arômes produites.

7. Procédé de fabrication selon l'une des revendications 1 à 4, **caractérisé en ce que** l'on modifie la synérèse du produit laitier ainsi fabriqué.

8. Procédé de fabrication selon l'une des revendications précédentes, **caractérisé en ce que** l'ensemencement du mélange laitier est effectué de manière indirecte par le fait que l'on effectue au préalable une ou plusieurs pré-cultures successives afin de constituer l'inoculum qui servira à ensemencer le mélange laitier à fermenter, et **caractérisé en ce que** l'on procède également à un traitement de la préculture en traitant son milieu de croissance par un gaz de pré-traitement permettant d'obtenir une valeur de potentiel redox inférieure à la valeur qui serait obtenue en l'absence de traitement.

9. Procédé de fabrication selon l'une des revendications précédentes, **caractérisé en ce que** ledit gaz de traitement ou de pré-traitement est de l'hydrogène.

10. Procédé de fabrication selon l'une des revendications 1 à 8, **caractérisé en ce que** ledit gaz de pré-traitement est de l'azote.

11. Procédé de fabrication selon l'une des revendications 1 à 8, **caractérisé en ce que** ledit gaz de traitement ou de pré-traitement est un mélange d'hydrogène et d'azote.

12. Procédé de fabrication selon l'une des revendications 1 à 8, **caractérisé en ce que** ledit gaz de traitement ou de pré-traitement comprend en outre un gaz complémentaire acceptable du point de vue dudit produit laitier considéré.

13. Procédé de fabrication selon la revendication 12, **caractérisé en ce que** le gaz complémentaire est choisi parmi les gaz inertes, notamment argon, hélium, et parmi l'oxygène, le dioxyde de carbone et le protoxyde d'azote et leurs mélanges en toutes proportions, de préférence parmi le dioxyde de carbone et l'oxygène ainsi que leurs mélanges.

14. Procédé de fabrication selon l'une des revendications 12 ou 13, **caractérisé en ce que** ledit gaz de traitement ou de pré-traitement est un mélange d'hydrogène et de dioxyde de carbone.
